# EUROPEAN PATENT APPLICATION

(11) **EP 0 818 768 A1**
(43) Date of publication of application: **14.01.1998**
(21) Application number: 95942215.5
(22) Date of filing: 29.12.1995
(51) Int. Cl.: G09F 21/04, B62B 5/00

(54) **SUPPORT FOR PUBLICITY AND SHOPPING LISTS, APPLICABLE TO SUPERMARKET TROLLEYS**

(30) Priority: 07.12.1995 PC /ES95/00241 T
(71) Applicant: Ramos Pinera,, Pascual, 28110 Algete (ES)
(72) Inventor: Ramos Pinera,, Pascual, 28110 Algete (ES)
(86) International application number: ES9500158
(87) International publication number: WO9721207

(57) **Abstract**

The support comprises two main planar and rectangular parts, preferably molded in rigid plastic material and provided with protuberances at the lower corners, said protuberances being used to fix the support to the handle (60) of a supermarket trolley. The main parts are provided with enlargements used as guides for transparent, slithly curved sheets (30) under which advertising boards can be placed. The assembly is covered with an elongate top part (40), from which extends a tongue (51) to retain the shopping list. Two symmetric protuberances extending from the main parts form a cylindrical receptacle (50) for a writing implement.

## Description

### SUBJECT MATTER OF THE INVENTION

The present descriptive memorandum refers to a patent of invention application, related to a publicity and various list types holder device, attachable to goods transport carts, which its self-evident finality lies in allowing the person who acquires goods in a establishment (such as shops, stores...), in keeping in a visible way, and with an easy access to it, a list in which previously had been included the names of the different products to be acquired, and also having the device, at one lateral side, a vertical hollow or case, aimed to contain a writing tool, which the customer will use to mark in his list the products he/she gradually buys, and being held (the list) by a clip or similar, located in the upper part of the holder device, that has a frontal side harmoniously shaped to allow the writing over it, and being the holder device located over on the goods transport cart in a totally firm, fasten way, or being capable of sustaining lateral movement, and marginally having the possibility of incorporating, letting in, publicity in the internal zone of the holder, acting so the holder device, consistently as a holder device with a self evident utility, in one way, and in the other as a static support for any kind of publicity.

### FIELD OF THE INVENTION

This invention has its application in the for the retailing and commerce auxiliary products and devices manufacturing industry, being also applicable to any industry related to the advertising and publicity field, in general.

### ANTECEDENTS OF THE INVENTION

As commonly known, the acquisition of products in big supermarkets or in big stores, it has lately become in a certain and convenient need.

The acquisition of various types of products means the making in a generalized way of a large purchase, that urges the shopper the use of a wheeled basket or cart, known as shopping cart.

This vehicles not only allow the transport of the goods, but also have in many occasions, a special area or part dedicated to ensure a placement for small kids. They also sometimes carry publicity in their lateral sides, which can be meant to attract the attention of the potential customers about some product offers which are also to be found there, or to inform the clients about some services of the same establishment or others in the area.

The publicity carried it is based in panels that are fixed by several different existing ways to the lateral sides of the cart, or the front and/or back panel of the carts basket, preferably in the smaller one (front), and consisting on a vertical emergent placard or small poster, aimed to keep the attention of the customer about a certain product.

The act of using a supermarket like the ones mentioned as a preferred establishment for a general purchase is getting more and more usual, and consequently urges the potential buyer, in many cases, to make a shopping list in his own domicile which contains the products needed to be bought.

The customers of such stores, who carry a shopping list, are forced in a inexcusable way, to keep the list in the hand in order to avoid to forget the buying of some of the goods included in it, which could lead to various "come and go" situations, in the search of the forgotten products, all around the place, revisiting areas where overseen products contained in the list.

The evident solution to the mentioned problems would be in having a support device where the cart user would keep visual track on the products in which he is interested, reflected on the list This list would be held by a firing-element on a supporter that would also easy the action of writing on it, and being this supporter located on the shopping cart, and that at the same time, this supporter could be used as a publicity media to the fore of the potential consumer.

Nevertheless, up to date, there is no consciousness about the existence of any kind of shopping cart publicity and shopping list holder device, that having some of the previously mentioned as ideal characteristics, could also be used as a publicity media.

### DESCRIPTION OF THE INVENTION

The publicity and various types of lists holder device for goods transport carts proposed by this invention, defines by itself an evident innovation in its field of application, as it aggregates in a harmonic way all the characteristics mentioned as ideal ones, and also occupying a minimal space of the carrying cart, being possible to be manufactured in different versions, which could follow the purpose of making even more easy the adequate visualization of the list held buy the potential buyer.

In a more concrete way, the publicity and various types of list holder device applicable to goods transport carts, subject of this invention, it is made up from the configuration of a frame, "chassis", cover-box formed from two pieces, preferably from a rigid plastic material, which present the general configuration of a square or rectangle, emerging from the lower vertexes two prolongations, angularly placed, that in their side have a hole or cast with a semicircle form.

The pieces do have strengthening nervures on its surface and two vertical guides that allow the incorporation of a complementary front panel, meant to contain between that panel an the exterior face of the two pieces that conform the device, and advertising panel, visible from the exterior.

The two pieces are get together by their back areas, forming a body hollow inside, which as being embed by two from one of the pieces emergent stubs which embody in two hollows located at the other piece, get both united, and at the same time, because of the existing hollows in the internal faces of the support arms, allow the fixation to the handle of the cart used for transporting the goods.

The two pieces that configure the support device, are also united at their upper side, via incorporation of a lengthened piece, hollow inside, provided with an emergent and curved stem in order to avoid its mobilization, closing, at its upper side, the whole form by the device, and avoiding this way, the possible penetration of dirt to the interior hollow space, and also avoiding the separation of the two panels, as the cart with the holder device is being used, and in consequence, giving more strength to the whole.

The piece that protects the static incorporated publicity it's configured as a plate made from rigid and transparent plastic material, that slides through the lateral guides, and gets joined with the lower part with no possibility of vertical ascendant displacement, once the strengthening cap is put. The cap also has the element or clip that holds the list.

It has to be indicated, that in the laterals, and properly placed, there are two semicircular protuberances that create with its union, as the main body gets configured, a vertical container in which takes place the introduction of the writing tool that will be utilized by the user to track the acquired articles, or for the incorporation of new ones, if remembered.

As last, it has also to be indicated that the invention can be, in an optional way, made as a support with a rectangular disposition in which the support arms are eliminated, and used as substitution, and for the fixation to the shopping cart, any other element or dispositive which is adequate to the desired fixation characteristics. Even a support capable of being mobilized over the fixation area, directed to maintain a certain freedom over the zone.

### DRAWS DESCRIPTION

To complete the description which is being made, and as a help on the better comprehension of the invention, the present descriptive memorandum includes as a part of itself a set of drawings, in which, and in a not limitative, but representative way, has been represented the following;
FIG. 1 Matches a lateral elevational of one of the pieces that configures the main body of the publicity and various types of list holder device attachable to goods transport carts subject of this invention.
FIG. 2 Matches a frontal elevational view from the object reflected in figure 1.
FIG. 3 Illustrates a B-C view from the object represented in figure 2.
FIG. 4 Illustrates a detail, through A, from object in figure 1.
FIG. 5 Illustrates a frontal elevational view from the complementary piece, that together with the one represented in the previous figures, makes the configuration of the main body, subject of this invention.
FIG. 6 Illustrates a lateral elevational view from the object reflected on figure 5.
FIG. 7 Illustrates a view through E-F of the object represented on figure 5.
FIG. 8 Illustrates a detall through G, from the object reflected in figure 6.
FIG. 9 Illustrates a top view from the piece that joins the external surfaces of invention's object, incorporating beneath itself the graphic publicity to be shown.
FIG. 10 Illustrates a detail through H-I of the object reflected in figure 9.
FIG. 11 Illustrates a top view of the fixation piece for the upper part and acting as tuft, top, retains the two principal pieces of the invention an also avoids the vertical and ascendant displacement of the object reflected in figures 9 and 10.
FIG. 12 Corresponds to a lateral elevational view of the object represented in figure 11.

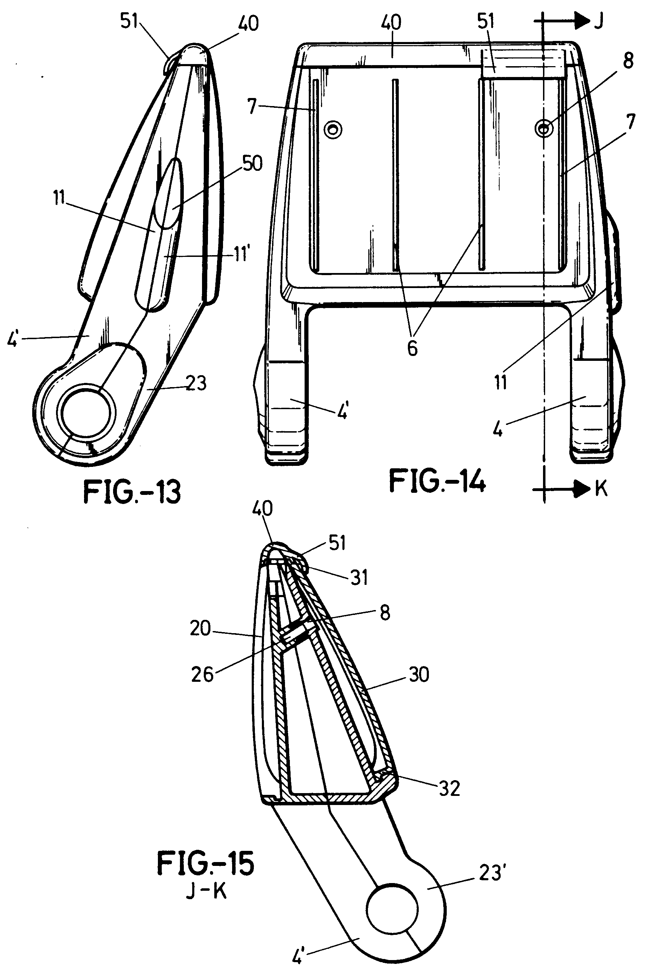

FIG. 13 Illustrates a lateral elevational view from the object of this invention, in which all previously represented elements had been put together.
FIG. 14 Corresponds to frontal elevational view from the object reflected in figure 13.
FIG. 15 Corresponds to a view through J-K of the object reflected in figure 14.
FIG. 16 Illustrates a perspective view of the invention attached to the handle of a shopping cart, showing to the user the face of the dispositive in which the list holder clip is incorporated.
FIG. 17 Illustrates an optional realization of the invention, with similar configuration to the shown in the previous figures, in which the support element has been changed.
FIG. 18 Illustrates, as last, the object represented in figure 17, attached in lateral of the cart's handle.

### PREFERRED REALIZATION OF THE INVENTION

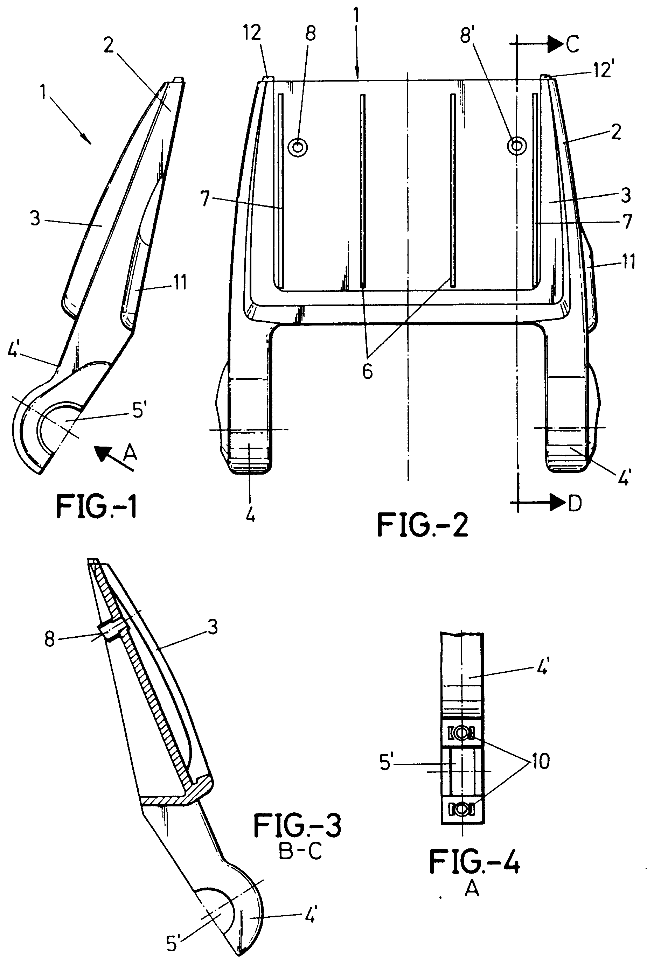

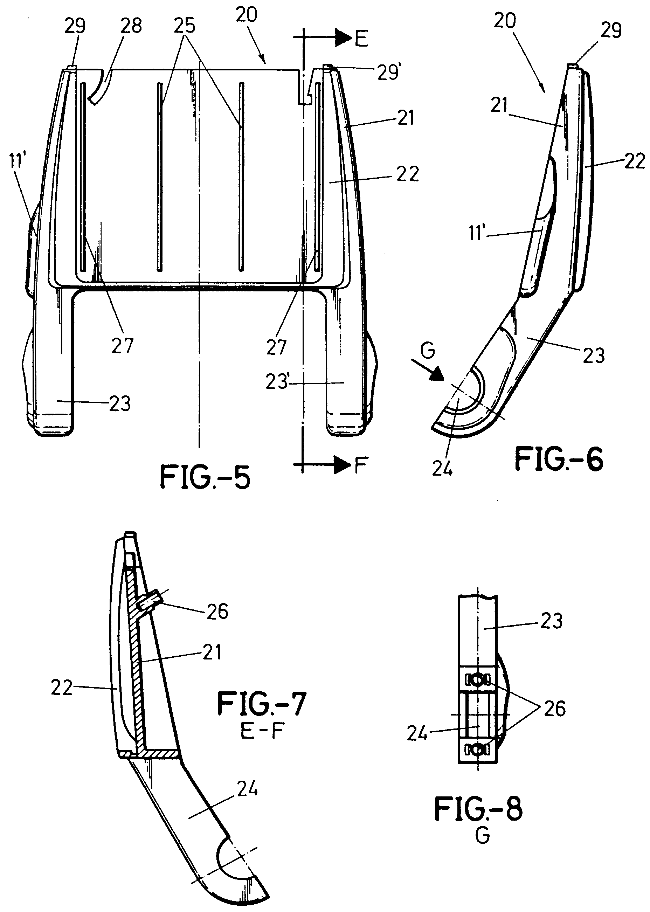

After watching this figures, it can be observed that the publicity and various types list holder device attachable to goods transport carts here anticipated, it is made out of two pieces, manufactured in rigid material, plastic could be it (1) and (20), represented in figures 1, 2, 3, 4, 5, 6, 7, 8, in different positions, respectively.

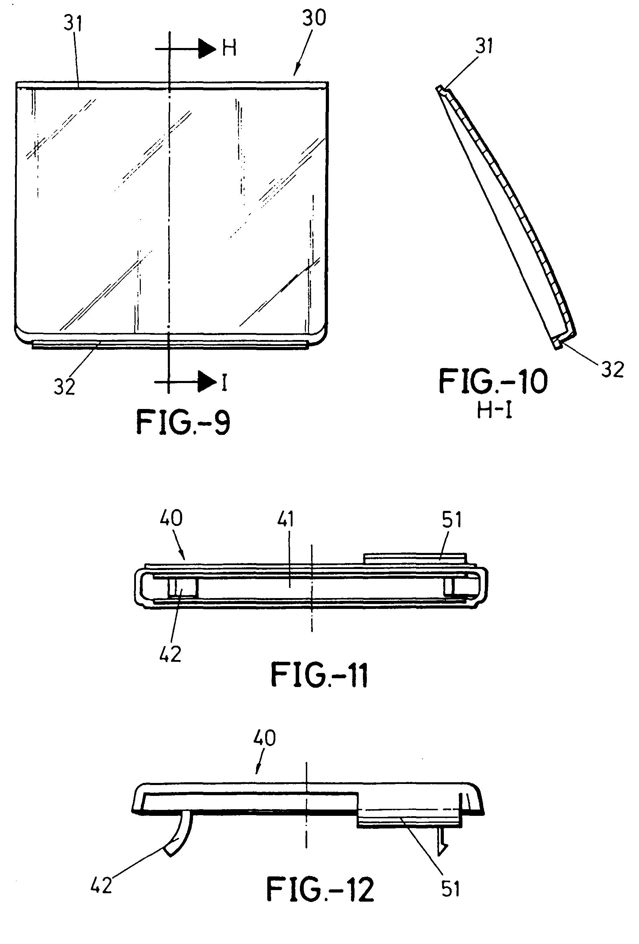

Following figure 1, it is to observe that it presents an upper configuration (2) that adopts the general configuration of a square or a rectangle, showing blunt edges in all its intertexture, having central strengthening zones (6), made up as vertical nervures, and two lateral protuberances inside the frontal surface of viewable face, constituted as guides (7), directed to allow the sliding and retention of a piece (30) made from transparent plastic material, showed in figures 9 and 10.

The piece (1), has also two lower lateral prolongations vertically placed, that have a re-grossed in its external area, and a re-abated hollow, with a semicircle's form (5) and (5'), being this prolongations (4) and (4') directed to allow its fixation to the handle (60) of the shopping cart (62).

The piece (1) has, internally, two cylindrical and hollow configurations aimed to allow the incorporation of sharped-pointed stubs (26), that emerge from the internal face of the complementary piece (20), with the purpose of obtaining the fixation of the pieces (1) and (20), at the time that their internal sides get face-to-face, consequently obtaining their appropriate joint.

Following with the piece (1), it is to be observed that in the external flat part delimitated by the curved or convex form (5) and (5'), fixation elements have been prearranged (10), in order to make possible to strengthen the union of pieces (1) and (20), at their lower extremes, for what the piece (20) has the complementary elements (26) over the elements (10), obtaining with the union of both the fixation of the pieces (1) and (20) through its lower zone, staying the pieces joined to the handle (60) of the shopping cart (62) by the hollow area (5), (5') and (24), (24'), incorporated in the prolongations (23) and (23') of the piece (20).

The piece (1) has in the upper zone two protuberances (12) and (12'), similar to protuberances (29) and (29') emergent from the upper part of the piece (20), and having this piece (20), a curved cleavage (28), to allow the incorporation of a stem (42), that emerges from the existing, as strengthening area, closing piece or upper cap (40), that couple's to the two joined pieces (1) and (20).

The piece (20) also counts on its vertical central nervures (25) and its lateral guides (27), for the incorporation of the protective plate (30) represented in figures 9 and 10, and that presents a certain curvature, showing its convex area to the exterior, and the concave to the interior, and having a transversal strengthening nervure (31) in the upper part, and an angular deformation (32) in the lower one, with the purpose of adapting to the existing stepping in the central zone, and horizontally placed of pieces (1) and (20), among the fixation guides (7) and (7') of the piece (1) or the guides (27) of the piece (20).

The piece (20), has as it is already been noted, prolongations (23) and (23'), similar to the prolongations (4) and (4'), equally equipped with the semicircular concavity (24) and (24') respectively, and having the piece (20) a vertical deformation (11') that as it obtains its adaptation to the deformation (11) form the support area (50) for a writing tool.

In the figure 12, it is to observe that the piece (40) has in the lower part a curved prolongation (42) that incorporates to opening (28) of the piece (20), consequently obtaining the fixation or strengthening of its position.

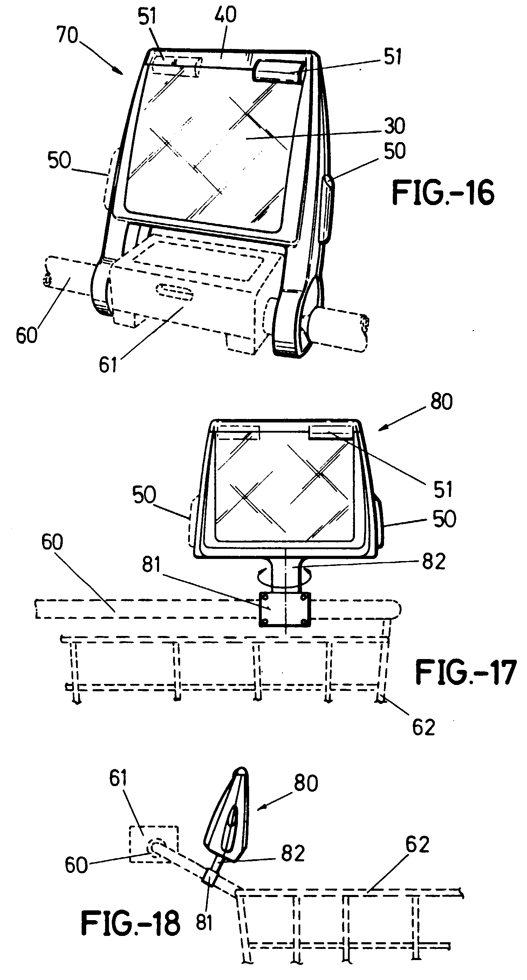

In the figure 16 it is observed how the support (70), formed by the union of the pieces (1) and (20) with the incorporation of the cap (40), gets fastened to the handle (60) of the cart (62), allowing the incorporation, between the stems or support legs that configure the sustentation nexus, of a cart retainer dispositive (70).

Optionally, as it can be seen in figures 17 and 18, the invention can substitute the emergent pieces that act as support, with a central stem (82), that joined to a fixation element (81) to the handle (60) of the cart (62), allows not only a placement in the frontal zone, but being even able to rotate and free the location zone.

Optionally, the support dispositive can be provided in the left lateral with a groove similar to the referenced with (50), obtained by the incorporation in this lateral of two winged curved protuberances (11) and (11'), consequently creating a writing tool receptive nexus usable by left handed persons.

To increase the potential of the invention, it can also have in the left upper zone a retaining clip (51), equally allowing that this application of the receptacle (50) for the writing tool, so it gets implemented over the invention with the placement of a listings retaining clip in the left upper lateral.

The holding clips (51) can be provided optionally with a flange that eases the incorporation of the listings.

It is not considered as necessary make this description more extensive, so any kind of skilled in the art understands the reach, range of the invention and the advantages form it generated.

The materials, form, size and disposition of the elements can be subject of variation, only as long it does not mean an alteration of the essentiality of the invention.

The terms in which this memorandum has been described shall be always taken with an ample, extensive nature, and not in a limitative one.

## Claims

1. Publicity and various list types holder device attachable to goods transport carts, characterized by being constituted out of two pieces (1) ad (20), that will preferably be made with a rigid plastic material, and that show a rectangular configuration plan, emerging from the extrems of the lower part two prolongations (4), (4') and (23), (23') respectively, which get joined together through their internal face, using as union nexus protuberances (8) and (8'), originated in the back part of the piece (1), that adopts the cylindrical hollow configuration, in which are to couple two protuberances (26) that emerge from the back part of the piece (20), being located in an appropiated way for its embedment, having in the frontal part of the two pieces (1) and (20), strengthening nervures (6) and (25) respectively, and protuberances as guides (7) and (27), sliding a slightly curved piece (30) through them, that has an upper strengthener (31) and a stepped protuberance or strengthener (32) in the lower part, being closed the dispositive with a piece (40) provided with an internal hollowness (41), that couples the upper face of the pieces (1) and (20) when they are joined, getting embed in the protuberances (12), (12') and (29), (29') that exist in the extrems of the upper part of the pieces (1) and (20), being provided the piece (20) with a re-abated curved hollow (28), originated in the upper part, through which it is introduced and adjusted an emergence equally curved originated in the piece (40), coupling the dispositive to the handle (60) of a shopping cart (62), using the hollows (5), (5') and (24), (24') existing on the prolongations (4) and (4') of the piece (1), (23) and (23') of the piece (20), becoming adjusted together both pieces by the fastening elements (10) and (26) respectively existing in both couples of prolongations.

2. Publicity and various list types holder device attachable to goods transport carts, according to first claim, characterized for in one of the laterals of each of the pieces (1) and (20), emerge vertically located two curved winged prominences (11) and (11') respectively, that when confronting the pieces (1) and (20) at their back face, configure a vertical receptacle (50).

3. Publicity and various list types holder device attachable to goods transport carts, according to first claim, characterized by having the pieces (1) and (20), in their frontals a re-gross (3) and (22) respectively, where the guides (7) and (27) are incorporated.

4. Publicity and various list types holder device attachable to goods transport carts, according to previous claims, characterized by in a second realization, the dispositive can be unprovided from the prolongations (4), (4') and (23), (23'), substituting them for its fastening to the handle (60) of the cart (62), with a support (82), located in the central zone that gets joined to a retaining element (81) located in the handle (60), being optionally this support (82) able to rotate over the retaining element (81).

5. Publicity and various list types holder device attachable to goods transport carts, according to first claim, characterized by as well in the first realization as in the second realization, the lists holder clip (51) originates on the piece (40) from one of its lateral sides, becoming joined to the surface of the covering piece with transparent constitution (30).

6. Publicity and various list types holder device attachable to goods transport carts, according to first and fifth claims, characterized for optionally the lists or listings holder clip (51), can be located in the lateral of the upper left part, and also can present in an optional way, as well in the one located in the right lateral as in the left, a mobilization flange.

7. Publicity and various list types holder device attachable to goods transport carts, according to first claim, characterized for, in an optional way, the receptacle (50) for the written element, can be located in the left lateral or both laterals.
